# EUROPÄISCHE PATENTSCHRIFT

(11) **EP 1 224 778 B1**
(45) Veröffentlichungstag und Bekanntmachung des Hinweises auf die Patenterteilung: **21.12.2005**
(21) Anmeldenummer: 00992759.1
(22) Anmeldetag: 27.10.2000
(51) Int. Cl.: G06F 11/20, H04L 12/56, H04Q 11/04

(54) **VERFAHREN ZUM BETREIBEN EINES ZWEITRECHNERS FUR DEN AUSFALLFREIEN BETRIEB UND ZUGEHÖRIGES PROGRAMM**
METHOD FOR OPERATING A SECONDARY COMPUTER FOR FLAWLESS OPERATION AND CORRESPONDING PROGRAMME
PROCEDE D'UTILISATION D'UN CALCULATEUR SECONDAIRE POUR LE FONCTIONNEMENT SANS PANNE ET PROGRAMME ASSOCIE

(30) Priorität: 29.10.1999 DE 19952312
(43) Veröffentlichungstag der Anmeldung: 24.07.2002
(73) Patentinhaber: SIEMENS AKTIENGESELLSCHAFT, 80333 München (DE)
(72) Erfinder: STELZL, Rudolf, 85221 Dachau (DE); STEINIGKE, Klaus, 81371 München (DE); POOCH, Gerhard, 82275 Emmering (DE); MÜLLER, Martin, 89231 Neu-Ulm (DE); BELGARDT, Eckhardt, 81737 München (DE)
(74) Vertreter: Berg, Peter
(86) Internationale Anmeldenummer: PCT/DE2000/003812
(87) Internationale Veröffentlichungsnummer: WO 2001/031934

(56) Entgegenhaltungen:
- US-A- 5 295 134
- RATHGEB E P: "THE MAINSTREETXPRESS 36190: A SCALABLE AND HIGHLY RELIABLE ATM CORESERVICES SWITCH" COMPUTER NETWORKS AND ISDN SYSTEMS,NL,NORTH HOLLAND PUBLISHING. AMSTERDAM, Bd. 31, Nr. 6, 25. März 1999 (1999-03-25), Seiten 583-601, XP000700290 ISSN: 0169-7552

## Beschreibung

Die Erfindung betrifft ein Verfahren zum Betreiben eines Zweitrechners, bei dem in einer ersten Speichereinheit eines Erstrechners Daten gespeichert werden. In einer Speichereinheit eines Zweitrechners wird ein Doppel der Daten gespeichert. Abhängig von Ereignissen beim Betrieb eines Steuerrechners werden vom Steuerrechner Änderungsmeldungen erzeugt. Der Steuerrechner überträgt eine zu einem Ereignis gehörende Änderungsmeldung unverzüglich nach dem Ereignis an den Erstrechner. Dadurch ist gewährleistet, daß der Erstrechner die Anderungsmeldung frühzeitig bearbeiten und ein durch die Änderungsmeldung betroffenes Datum bzw. einen betroffenen Datensatz ändern kann.

Der Zweitrechner wird beispielsweise als zum Erstrechner redundanter Rechner eingesetzt. Im Falle einer Betriebsstörung des Erstrechners übernimmt der Zweitrechner die Funktion des Erstrechners, wie z.B. in der Druckschrift RATHGEB E P: "THE MAINSTREETXPRESS 36190: A SCALABLE AND HIGHLY RELIABLE ATM CORESERVICES SWITCH" (COMPUTER NETWORKS AND ISDN SYSTEMS,NL,NORTH HOLLAND PUBLISHING. AMSTERDAM, Bd. 31, Nr. 6, 25. März 1999 (1999-03-25), Seiten 583-601, ISSN: 0169-7552) offenbart. Für den Betrieb eines elektronischen Gerätes notwendige Funktionsabläufe lassen sich so im Fall einer Betriebsstörung des Erstrechners ohne Unterbrechung mit Hilfe des Zweitrechners aufrecht erhalten. Jedoch muß beim Umschalten zwischen Erstrechner und Zweitrechner ein Verfahren gewählt werden, bei dem möglichst keine Datenverluste auftreten.

Bekannt sind synchrone Rechneranordnungen, bei denen Erstrechner und Zweitrechner synchron zueinander arbeiten und getrennte Speichereinheiten oder dieselbe Speichereinheit verwenden. Diese Lösung ist jedoch schaltungstechnisch aufwendig. Die Daten der gemeinsam verwendeten Speichereinheit müssen außerdem mittels eines besonderen Verfahrens gespeichert werden, um im Fall eines Ausfalls der Speichereinheit Datenverluste zu vermeiden.

Eine andere Lösung besteht darin, daß der Zweitrechner anwendungsbezogene Daten nach dem Ausfallen des Erstrechners neu erstellt. Die bisherigen Daten gehen verloren und können somit nicht weiter verwendet werden. Die Bereitschaft des Zeitrechners wird in diesem Fall englisch auch als "cool-standby" bezeichnet.

Wird im Zweitrechner das Doppel der Daten erst nach der Betriebsstörung im Erstrechner von einem übergeordneten Rechner übermittelt, so entsteht hierdurch eine länger andauernde Unterbrechung der Anwendung. Solche Unterbrechungen sollten jedoch bei einem ausfallfreien Betrieb gerade vermieden werden.

Es ist Aufgabe der Erfindung zum Betreiben eines Zweitrechners ein einfaches Verfahren anzugeben, welches gewährleistet, daß bei Störungen eines anderen Rechners die Funktion dieses Rechners vom Zweitrechner ohne wesentliche Datenverluste übernommen werden kann. Außerdem sollen zugehörige Vermittlungseinrichtungen sowie ein zugehöriges Programm angegeben werden.

Die das Verfahren betreffende Aufgabe wird durch ein Verfahren mit den im Patentanspruch 1 angegebenen Verfahrensschritten gelöst. Weiterbildungen sind in den Unteransprüchen angegeben.

Beim erfindungsgemäßen Verfahren wird zusätzlich zu den eingangs genannten Verfahrensschritten ein Doppel der Änderungsmeldung auch an den Zweitrechner unverzüglich übertragen. Die Daten und ihr Doppel werden im Erstrechner und im Zweitrechner gemäß der Änderungsmeldungen geändert. Die Änderungsmeldungen werden sowohl zum Erstrechner als auch zum Zweitrechner unverzüglich nach einem Ereignis übertragen, das die Anderungsmeldungen zur Folge hatte. Ein unverzügliches Übertragen erfordert insbesondere, daß nicht eine vorgegebene Zeit gewartet wird, bis mehrere Änderungsmeldungen zum Zweitrechner zu übertragen sind. Bei einem unverzüglichen Übertragen darf auch nicht erst abgewartet werden, bis eine vorgegebene Anzahl von Anderungsmeldungen zum Zweitrechner zu übertragen ist. Somit werden beim erfindungsgemäßen Verfahren die Änderungsmeldungen an den Zweitrechner gleichzeitig bzw. nicht wesentlich nach den Änderungsmeldungen an den Erstrechner übertragen.

Datenverluste werden auch vermieden, wenn es im Erstrechner neben Daten, die über mehrere Jahre unverändert bleiben, ebenso Daten gibt, die sich im Verlauf weniger Sekunden ändern. Wenn jederzeit mit einem Ausfall gerechnet werden muß, ist das unverzügliche Weiterleiten eine einfache Maßnahme, um im Fehlerfall Unterbrechungen zum Aktualisieren zu vermeiden. Insbesondere müssen beim Einsatz des erfindungsgemäßen Verfahrens nicht erst eine Vielzahl von Daten für kurzzeitig Verbindungen aktualisiert werden, wie es bei einem periodischen Aktualisieren aufgrund mehrerer Änderungsmeldungen der Fall wäre.

Durch das unverzügliche Übertragen der Änderungsmeldung ist gewährleistet, daß nahezu keine Datenverluste bei einem Ausfall des Erstrechners und einem unverzüglichen Umschalten auf den Zweitrechner auftreten. Im Zweitrechner befindet sich ständig der neuesten Datenbestand. Aufgrund des unverzüglichen Übertragens der Änderungsmeldungen wird allenfalls eine einzige Anderungsmeldung im Zweitrechner nicht bearbeitet, falls der Erstrechner ausfällt. Die Umschaltzeit beträgt beispielsweise etwa 50 Millisekunden.

Bei einer Weiterbildung des erfindungsgemäßen Verfahrens werden die Änderungsmeldungen direkt vom Steuerrechner zum Zweitrechner ohne Zwischenschaltung des Erstrechners übertragen. Ein zusätzlicher Querkanal zur Übertragung der Änderungsmeldungen vom Erstrechner zum Zweitrechner wird in diesem Fall nicht benötigt. Ist ein Querkanal zwischen Erstrechner und Zweitrechner für andere Zwecke vorhanden, so wird durch die Änderungsmeldungen keine Übertragungskapazität des Querkanals beansprucht.

Bei einer alternativen Ausgestaltung werden die Änderungsmeldungen vom Erstrechner zum Zweitrechner übertragen. Um den normalen Betrieb der Anwendung zu gewährleisten, müssen die Änderungsmeldungen ohnehin zum Erstrechner übertragen werden. Der Steuerrechner muß die Änderungsmeldungen nur an den Erstrechner senden, ohne zusätzliche Änderungsmeldungen an den Zweitrechner bearbeiten zu müssen. Diese Ausgestaltung führt somit zu einer Entlastung des Steuerrechners.

Zu Beginn einer Weiterbildung des erfindungsgemäßen Verfahrens sind in einer Speichereinheit eines Ursprungsrechners eine erste Datenmenge und eine zweite Datenmenge gespeichert. Die erste Datenmenge oder ein Doppel der ersten Datenmenge wird vom Ursprungsrechner zu einem Zweitrechner übertragen und in einer Speichereinheit des Zweitrechners gespeichert. Nach der Übertragung der ersten Datenmenge zum Zweitrechner wird eine Anderungsmeldung übertragen, die Änderungen bezüglich der ersten Datenmenge betrifft. Die Anderungsmeldung wird bei einer Ausgestaltung unverzüglich nach dem Empfang im Zweitrechner bearbeitet. Das bedeutet, dass die zugehörige Änderung im Zweitrechner ausgeführt wird, bevor die zweite Datenmenge übertragen wird. Anschließend wird die zweite Datenmenge selbst oder ein Doppel der zweiten Datenmenge vom Ursprungsrechner zum Zweitrechner übertragen und in der Speichereinheit des Zweitrechners gespeichert. Aus der Sicht des Zweitrechners erfolgt das übertragen der zweiten Datenmenge unmittelbar nach dem Bearbeiten der Änderungsmeldung im Zweitrechner, d. h. ohne zwischenzeitlich andere Verfahrensschritte auszuführen, die Änderungsmeldungen oder Kopiervorgänge betreffen.

Diesem Verfahren liegt die Erkenntnis zugrunde, daß nur Änderungsmeldungen übertragen werden müssen, welche das bereits übertragene Doppel der ersten Datenmenge betreffen. Änderungen, welche noch nicht gedoppelte Daten betreffen, können im Ursprungsrechner durchgeführt werden, so daß keine Änderungsmeldungen zum Zweitrechner zu übertragen sind. Es hat sich bei der Anwendung überraschender Weise gezeigt, daß im Vergleich zu einem Verfahren, bei dem erst die Doppel der Datenmengen und danach die Änderungsmeldung übertragen werden, nur noch bei etwa der Hälfte der Änderungen Änderungmeldungen übertragen werden müssen. Die andere Hälfte der Änderungen braucht nur im Ursprungsrechner ausgeführt werden. Dies ist darauf zurückzuführen, das zu Beginn des Ubertragungsvorgangs der Datenmengen die meisten Änderungen Daten betreffen, von denen noch kein Doppel übertragen worden ist, d. h. die zweite Datenmenge. Erst zum Ende des Verfahrens hin werden zunehmend Daten durch die Änderungen betroffen, von denen bereits Doppel übertragen worden sind, d. h. Daten der ersten Datenmenge.

Ein Speicher zum Speichern der während der Übertragung der Datenmengen auftretenden Änderungen wird bei diesem Verfahren nicht benötigt. Es ist gewährleistet, daß ein Bereitschaftszeitpunkt genau bestimmt werden kann, zu welchem auf dem Zweitrechner die gleichen Daten wie auf dem Ursprungsrechner vorhanden sind. Der Bereitschaftszeitpunkt ist nämlich entweder mit dem Speichern des Doppel der zweiten Datenmenge im Zweitrechner bzw. dem Übertragen der letzten Änderungsmeldung erreicht, je nachdem welcher Vorgang später ausgeführt wird. Da wie oben ausgeführt, nur für etwa die Hälfte der während des Kopierens auftretenden Änderungen Änderungmeldungen zum Zweitrechner zu übertragen sind, wird der Bereitschaftszeitpunkt früh erreicht. Werden die zu übertragenden Doppel der Datenmengen und die Änderungsmeldungen auf verschiedenen Wegen zum Zweitrechner übertragen, so ist der Zweitrechner noch früher bereit zur Übernahme der Funktion eines ausgefallenen Rechners.

Die Datenmengen enthalten beispielsweise Einzelwerte, wie z. B. Ganzzahlwerte. Jedoch werden auch Datenmengen verwendet, die gleich aufgebaute Datensätze enthalten. Als Datenmenge kann somit sowohl ein Einzeldatum bzw. ein einzelner Datensatz als auch eine bestimmte Anzahl Daten bzw. Datensätze betrachtet werden.

Bei einer ersten Alternative des erfindungsgemäßen Verfahrens ist der Ursprungsrechner ein Erstrechner, dessen Funktion vom Zweitrechner bei Betriebsstörungen des Erstrechners übernommen wird. Die erste Datenmenge betreffende Änderungsmeldungen und die zweite Datenmenge betreffende Änderungsmeldungen werden von einem Steuerrechner aus zum Ursprungsrechner übertragen. Der Steuerrechner dient zum Steuern des Ursprungsrechners. Im Ursprungsrechner wird geprüft, ob die vom Steuerrechner kommenden Anderungsmeldungen die erste Datenmenge oder die zweite Datenmenge betreffen. Zum Zweitrechner werden nur Änderungsmeldungen übertragen, die eine bereits gedoppelte Datenmenge betreffen, d. h. die erste Datenmenge. Die zum Zweitrechner übertragenen Änderungsmeldungen sind Kopien der zum Ursprungsrechner übertragenen Änderungsmeldungen, d. h. sie enthalten im wesentlichen die gleichen Daten. Die vom Steuerrechner kommenden Änderungsmeldungen werden alternativ auch unverändert zum Zweitrechner weitergeleitet.

Betreffen vom Steuerrechner kommende Änderungsmeldungen eine noch nicht gedoppelte Datenmenge, d. h. die zweite Datenmenge, so wird eine durch die Änderungsmeldung veranlaßte Änderung im Ursprungsrechner ausgeführt. Die Anderungsmeldung bzw. eine Kopie der Änderungsmeldung wird in diesem Fall nicht an den Zweitrechner weitergeleitet.

Bei der ersten Alternative muß der Steuerrechner die Änderungsmeldungen nur an den Ursprungsrechner senden. Außerdem nehmen die zu übertragenden Doppel der Datenmengen und die Anderungsmeldungen den gleichen Übertragungsweg.

Werden die Änderungsmeldungen bei der ersten Alternative von einem Steuerrechner erzeugt, der vor Beginn des Verfahrens auch die zu kopierenden Datenmengen an den Erstrechner gesendet hat, so wird der Steuerrechner durch die Übertragung der gedoppelten Datenmengen vom Erstrechner zum Zweitrechner sowie durch die Übertragung der Änderungsmeldungen nicht zusätzlich belastet.

Bei einer zweiten Alternative ist der Ursprungsrechner ebenfalls ein Erstrechner, dessen Funktion vom Zweitrechner bei Betriebsstörungen des Erstrechners übernommen wird. Die erste Datenmenge und die zweite Datenmenge betreffende Änderungsmeldungen werden jedoch von einem Steuerrechner zum Steuern des Zweitrechners ohne Zwischenschaltung des Ursprungsrechners zum Zweitrechner übertragen. Somit nehmen die zu übertragenden Daten einen anderen Weg als die Änderungsmeldungen.

Dadurch können die zu übertragenden Daten und die Anderungsmeldungen schneller zum Zweitrechner übertragen werden.

Gelangen die Änderungsmeldungen etwa gleichzeitig zum Erstrechner und zum Zweitrechner, so müssen im Zweitrechner nur wenige Verfahrensschritte durchgeführt werden, um zu verhindern, daß das Doppel einer Datenmenge aufgrund einer Änderungsmeldung im zweiten Rechner geändert wird, obwohl die Datenmenge selbst vor dem Kopieren aufgrund einer auf das gleiche Ereignis zurückgehenden Änderungsmeldung im Ursprungsrechner bereits geändert worden ist. Es ist auch gewährleistet, daß sowohl die Datenmenge als auch das zugehörige Doppel in jedem Fall den neuesten Stand haben. Wird nämlich im Zweitrechner eine Anderungsmeldung empfangen, die eine noch nicht übertragene Datenmenge betrifft, so wird diese Anderungsmeldung nicht weiter bearbeitet. Dies ist zulässig, weil davon ausgegangen werden kann, daß eine der im Zweitrechner empfangenen Änderungsmeldung entsprechende Änderungsmeldung im Erstrechner bereits bearbeitet wurde, bevor zu einem späteren Zeitpunkt die bereits geänderte Datenmenge bzw. deren Doppel an den Zweitrechner gesendet wird. Wird dagegen eine Änderungsmeldung im Zweitrechner empfangen, die ein bereits vom Erstrechner zum Zweitrechner übertragenes Doppel einer Datenmenge betrifft, so wird die Änderungsmeldung im Zweitrechner bearbeitet und das betroffene Doppel der Datenmenge geändert. Es ist davon auszugehen, daß das Doppel übertragen worden ist, bevor die durch die Änderungsmeldung erforderliche Änderung am bereits gedoppelten Datensatz im Ursprungsrechner ausgeführt worden ist. Unabhängig von der Bearbeitung im Zweitrechner erhält also auch der Erstrechner vom Steuerrechner eine entsprechende Änderungsmeldung, bei deren Bearbeitung die bereits gedoppelte Datenmengen verändert wird. Der Steuerrechner wird bei der zweiten Alternative durch ein zusätzliches Prüfungsverfahren nicht belastet.

Bei einer dritten Alternative ist der Ursprungsrechner ein Steuerrechner zum Steuern des Zweitrechners. Im Ursprungsrechner wird geprüft, ob die zu übertragenden Änderungsmeldungen die erste Datenmenge oder die zweite Datenmenge betreffen. Die Änderungsmeldungen werden nur dann an den Zweitrechner übertragen, wenn sie eine bereits übertragene Datenmenge betreffen. An den Erstrechner sind alle Anderungsmeldungen zu senden, um einen ordnungsgemäßen Ablauf der Anwendung zu gewährleisten. Im Steuerrechner werden die Änderungen ebenfalls durchgeführt, falls die Datenmengen noch für andere Zwecke benötigt werden. Bei der dritten Alternative nehmen zu übertragene Datenmengen und Änderungsmeldungen den gleichen Übertragungsweg. Ein zusätzlicher Querkanal zwischen Erstrechner und Zweitrechner ist nicht erforderlich. Wird im Ursprungsrechner bzw. im Steuerrechner festgestellt, daß eine Anderungsmeldung eine noch nicht übertragene Datenmenge betrifft, so wird die Änderung im Steuerrechner durchgeführt. An den Erstrechner wird eine Anderungsmeldung gesendet, nicht jedoch an den Zweitrechner. Die dritte Alternative gewährleistet, daß keine überflüssigen Änderungsmeldungen übertragen werden müssen. Außerdem ist bei Inbetriebnahme des Zweitrechners ein Zwischenspeichern der Änderungsmeldungen nicht notwendig.

Bei einer vierten Alternative des erfindungsgemäßen Verfahrens ist der Ursprungsrechner ein Steuerrechner zum Steuern des Zweitrechners. Die Anderungsmeldungen, welche die erste Datenmenge, und die Änderungsmeldungen, welche die zweite Datenmenge betreffen, werden vom Steuerrechner zu einem Erstrechner übertragen, dessen Funktion vom Zweitrechner bei Betriebsstörungen des Erstrechners übernommen wird. Im Steuerrechner werden vom Erstrechner an den Zweitrechner weiterzuleitende Änderungsmeldung entsprechend markiert. Abhängig von der Markierung leitet der Erstrechner die markierten Änderungen selbst oder eine Kopie dieser Änderungsmeldungen weiter. Die zu übertragenden Doppel der Datenmengen nehmen einen anderen Übertragungsweg als die Anderungsmeldungen, so daß eine schnelle Übertragung erfolgen kann. Der Steuerrechner wird durch das Versenden der Anderungsmeldungen nicht mehr als notwendig belastet, da die Änderungsmeldungen ohnehin zum Erstrechner übertragen werden müssen. Zwischen Erstrechner und Zweitrechner muß ein Querkanal vorhanden sein. Dieser Querkanal hat meist eine geringere Übertragungskapazität als die Übertragungskanäle vom Steuerrechner zum Erstrechner bzw. vom Steuerrechner zum Zweitrechner. Für das Übertragen der Änderungsmeldungen ist die Übertragungskapazität des Querkanals jedoch ausreichend.

Bei einer Ausgestaltung des erfindungsgemäßen Verfahrens wird die erste Datenmenge blockweise mit weiteren Datenmengen übertragen. Auch die zweite Datenmenge wird blockweise mit anderen Datenmengen übertragen. Durch die blockweise Übertragung, von z. B. jeweils zehn Datenmengen, wird erreicht, daß der Signalisierungsaufwand sinkt.

Die Weiterbildungen des erfindungsgemäßen Verfahren werden eingesetzt, bevor das Verfahren gemäß erstem Anspruch durchgeführt wird. Die Verfahren hängen technologisch eng zusammen. Durch die Kombination der Verfahren wird erreicht, daß sich ein "gleitender" Übergang zwischen den beiden Verfahren ergibt. Zusätzliche Verfahrensschritte und zusätzliche Maßnahmen müssen nicht durchgeführt werden.

Bei einer Weiterbildung des erfindungsgemäßen Verfahrens arbeiten die beteiligten Rechner asynchron zueinander. Maßnahmen zur Synchronisierung können somit entfallen. Weiterhin werden unterschiedliche Speichereinheiten verwendet. Das bedeutet, daß die Rechner nicht auf einen gemeinsamen Speicher zugreifen. Dies hat zur Folge, daß bei Betriebsstörungen einer Speichereinheit ohne weiteres auf die andere Speichereinheit umgeschaltet werden kann.

Die erfindungsgemäßen Verfahren und ihre Weiterbildungen werden in Vermittlungsstellen eingesetzt, in denen sehr hohe Anforderungen an einen ausfallfreien Betrieb gestellt werden.

Ausführungsbeispiele der Erfindung betreffen außerdem Vermittlungseinrichtungen für die Durchführung der Verfahren sowie deren Weiterbildungen. Außerdem betrifft die Erfindung ein Programm zum Ausführen der erfindungsgemäßen Verfahren und deren Weiterbildungen. Somit gelten die oben genannten technischen Wirkungen auch für die Vermittlungseinrichtungen und das Programm.

Im folgenden werden Ausführungsbeispiele der Erfindung anhand der beiliegenden Zeichnungen erläutert. Darin zeigen:
Figur 1 den Aufbau einer ATM-Vermittlungsstelle,
Figur 2 das konsistente Kopieren von Datensätzen in der Vermittlungsstelle,
Figur 3 die Übertragung von Änderungsmeldungen während des Kopierens der Datensätze,
Figur 4 das konsistente Kopieren von Datensätzen in der Vermittlungsstelle gemäß einem zweiten Ausführungsbeispiel, und
Figur 5 das Übertragen von Änderungsmeldungen während des Kopierens der Datensätze beim zweiten Ausführungsbeispiel.

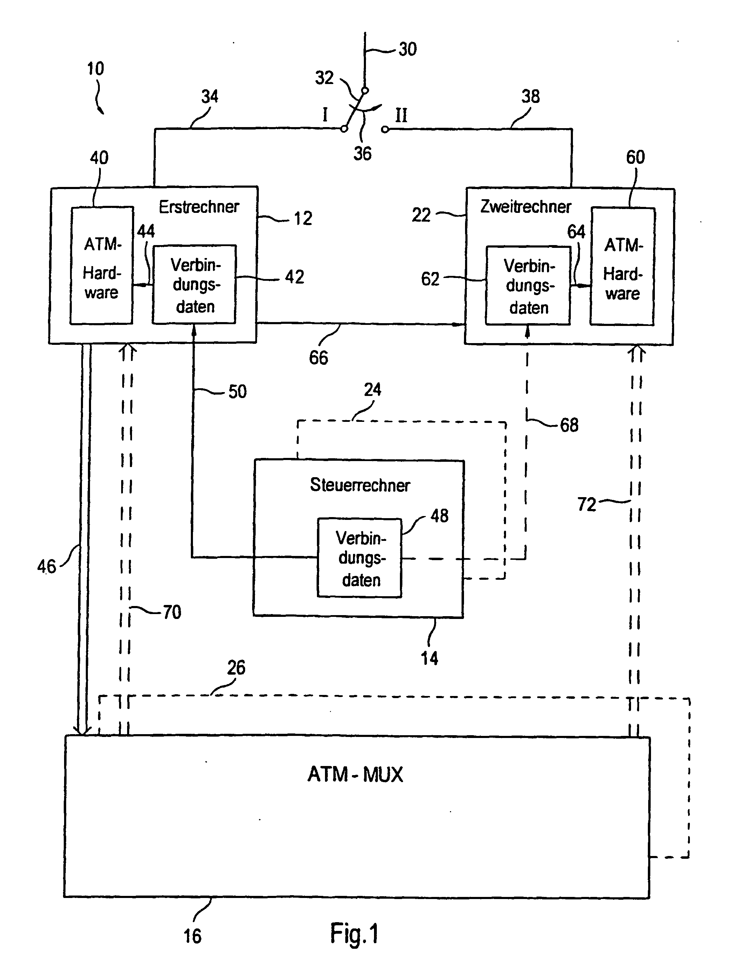

Figur 1 zeigt den Aufbau einer ATM-Vermittlungsstelle 10 (asynchronous transfer mode). Die Vermittlungsstelle 10 enthält eine Anschlußbaugruppe 12, einen Steuerrechner 14 und ein Koppelfeld, von dem in Figur 1 ein Multiplexer 16 dargestellt ist. Damit der Betrieb der Vermittlungsstelle 10 auch bei Ausfällen einzelner Baugruppen gewährleistet ist, sind die Anschlußbaugruppe 12, der Steuerrechner 14 und der Multiplexer 16 doppelt vorhanden, vgl. Anschlußbaugruppe 22, Steuerrechner 24 und Multiplexer 26. Eine Verbindungsleitung 30 führt von einer nicht dargestellten Vermittlungsstelle zur Vermittlungsstelle 10. Auf der Verbindungsleitung 30 werden ATM-Zellen zur Vermittlungsstelle 10 übertragen.

Die Verbindungsleitung 30 endet an einer Umschalteinrichtung 32. Die Umschalteinrichtung 32 befindet sich im störungsfreien Betrieb der Anschlußbaugruppe 12 in einer Schalterstellung I. In der Schalterstellung I ist die Verbindungsleitung 30 über eine weitere Verbindungsleitung 34 mit der Anschlußbaugruppe 12 verbunden. Im Störungsfall der Anschlußbaugruppe 12 schaltet die Umschalteinrichtung 32 in eine Schalterstellung II um, vgl. Pfeil 36. In der Schalterstellung II wird die Verbindungsleitung 30 mit einer Verbindungsleitung 38 verbunden, die zur Anschlußbaugruppe 22 führt. Die Anschlußbaugruppe 12 enthält eine Schaltung 40 zum Bearbeiten der empfangenen ATM-Zellen. In der Schaltung 40 werden beispielsweise sogenannte Leerzellen entfernt. Außerdem werden die Zellen unter Verwendung von Verbindungsdaten 42 für die Vermittlung im Koppelfeld vorbereitet, vgl. Pfeil 44. Die Verbindungsdaten 42 sind in einem Speicher der Anschlußbaugruppe 12 gespeichert und enthalten Angaben über sogenannte virtuelle Verbindungen, bei denen die zu vermittelnden Zellen an Hand einer Kanalnummer einander zugeordnet werden. Außerdem gibt es Verbindungsdaten, die sogenannte permanente Verbindungen betreffen, d. h. Verbindungen, die über einen langen Zeitraum, beispielsweise mehrere Jahre, in einer einmal festgelegten Richtung geschaltet werden. Nach der Bearbeitung durch die Schaltung 40 werden die Zellen über eine übertragungsstrecke 46 zum Multiplexer 16 übertragen, wo mit der Vermittlung begonnen wird.

Die Anschlußbaugruppe 12 enthält einen nicht dargestellten Mikroprozessor, der Befehle in einem Speicher bearbeitet und dabei unter Verwendung der Verbindungsdaten 42 die Schaltung 40 steuert. Somit ist die Anschlußbaugruppe 12 ein Erstrechner.

Bei den Verbindungsdaten 42 handelt es sich um eine Kopie von Verbindungsdaten 48, die im Steuerrechner 14 gespeichert sind. Die Verbindungsdaten 48 wurden vom Steuerrechner 14 aufgrund von Signalisierungen zwischen den beteiligten Vermittlungsstellen beim Verbindungsaufbau und beim Verbindungsabbau erstellt. Kopien der Verbindungsdaten 48 wurden als Anderungsmeldungen über einen Übertragungskanal 50 zur Anschlußbaugruppe 12 übertragen und als Verbindungsdaten 42 gespeichert.

Die Anschlußbaugruppe 22 hat den gleichen Aufbau wie die Anschlußbaugruppe 12. Eine Schaltung 60 entspricht der Schaltung 40. Verbindungsdaten 62 stimmen mit den Verbindungsdaten 42 überein. Ein Pfeil 64 zeigt den Einfluß der Verbindungsdaten 62 auf die Schaltung 60. Befindet sich die Anschlußbaugruppe 22 in Bereitschaft, so werden über die Verbindungsleitung 38 keine ATM-Zellen übertragen. Trotzdem werden die Verbindungsdaten 62 ständig aktualisiert. Die Schaltung 60 wird entsprechend der Aktualisierungen gesteuert. Dadurch ist gewährleistet, daß bei Betriebsstörungen in der Anschlußbaugruppe 12 die Funktion dieser Anschlußbaugruppe innerhalb weniger Millisekunden von der Anschlußbaugruppe 22 übernommen werden kann. Die Anschlußbaugruppe 22 wird deshalb auch als Zweitrechner bezeichnet.

Die Verbindungsdaten 62 werden über den Übertragungskanal 50 und einen Querkanal 66 aktualisiert, der von der Anschlußbaugruppe 12 zur Anschlußbaugruppe 22 führt. Alle Anderungsmeldungen, die vom Steuerrechner 14 zur Anschlußbaugruppe 12 gesendet werden, werden in der Anschlußbaugruppe 12 an die Anschlußbaugruppe 22 über den Querkanal 66 weitergeleitet. In beiden Anschlußbaugruppen 12 und 22 werden die Verbindungsdaten 62 gemäß der eintreffenden Anderungsmeldungen verändert.

Es wird jedoch auch ein Verfahren angewendet, bei dem die Anderungsmeldungen ohne die Verwendung eines Querkanals 66 zur Anschlußbaugruppe 22 gelangen. In diesem Fall werden vom Steuerrechner 14 zur Anschlußbaugruppe 12 die Änderungsmeldungen weiterhin über den Ubertragungskanal 50 übertragen. Der Steuerrechner überträgt außerdem über einen Übertragungskanal 68 die Änderungsmeldungen direkt zur Anschlußbaugruppe 22, d. h. ohne Zwischenschaltung der Anschlußbaugruppe 12. Die Anderungsmeldungen werden vom Steuerrechner 14 gleichzeitig an die Anschlußbaugruppe 12 und die Anschlußbaugruppe 22 gesendet. Das Versenden der Änderungsmeldungen erfolgt unverzüglich, nachdem ein Ereignis aufgetreten ist, das die Anderungsmeldungen verursacht hat. Eine Zwischenspeicherung von Anderungsmeldung findet somit im Steuerrechner 14 nicht statt.

Die Anschlußbaugruppen 12 und 22 übernehmen auch Funktionen für nicht dargestellte Verbindungsleiturrgen, auf denen Zellen von der Vermittlungsstelle 10 ausgesendet werden. Auch für solche Verbindungsleitungen gibt es eine der Umschalteinrichtung 32 entsprechende Umschalteinrichtung. In Figur 1 deuten Übertragungsstrecken 70 und 72 die Übertragung von Zellen an, die im Koppelfeld vermittelt worden sind und vom Multiplexer 16 zu den Anschlußbaugruppen 12 und 22 gelangen. Im betriebsstörungsfreien Fall werden die über die Übertragungsstrecken 70 und 72 übertragenen Zellen in beiden Anschlußbaugruppen 12 und 22 mit Hilfe der Schaltungen 40 bzw. 60 bearbeitet. Jedoch werden nur die in der Anschlußbaugruppe 12 bearbeiteten Zellen an die folgende Vermittlungsstelle gesendet. Die in der Schaltung 60 bearbeiteten Zellen gelangen nur nach dem Umschalten der der Umschalteinrichtung 32 entsprechenden Umschalteinrichtung zu einer Übertragungsstrecke, die zur nächsten Vermittlungsstelle führt.

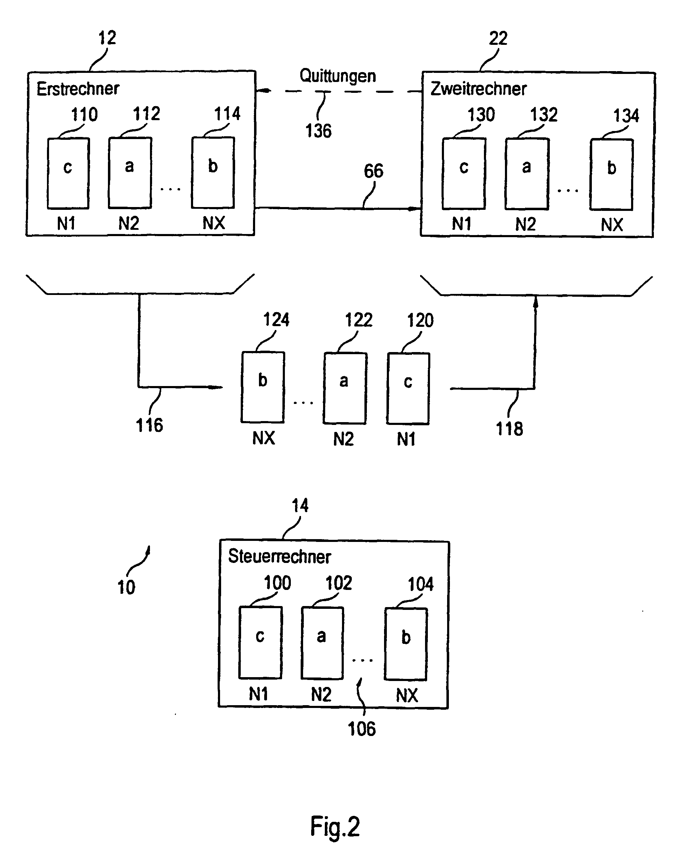

Anhand der Figuren 2 bis 5 werden im folgenden zwei Ausführungsbeispiele für Verfahren erläutert, mit denen die Anschlußbaugruppe 22 in Bereitschaft versetzt werden kann. Während das anhand der Figur 1 erläuterte Verfahren durchgeführt wird, wenn die Anschlußbaugruppe 22 bereits bereit ist, werden die anhand der Figuren 2 bis 5 erläuterten Verfahren beispielsweise bei der Inbetriebnahme der Vermittlungsstelle 10 oder bei der Inbetriebnahme der Anschlußbaugruppe 22 durchgeführt, z. B. wenn die Anschlußbaugruppe 22 nach einer Reparatur wieder in die Vermittlungsstelle 10 eingesteckt und erneut in Betrieb genommen wird.

Figur 2 zeigt das konsistente Kopieren von Datensätzen in der Vermittlungsstelle 10 gemäß einem ersten Ausführungsbeispiel. Vor dem Einsetzen der Anschlußbaugruppe 22 in die Vermittlungsstelle 10 steuert der Steuerrechner 14 die Anschlußbaugruppe 12. Beim Betrieb der Vermittlungsstelle 10 wurden im Steuerrechner 14 Datensätze 100 bis 104 erzeugt und gespeichert, in denen jeweils die Daten für eine virtuelle Verbindung gespeichert sind. Punkte 106 deuten weitere Datensätze an, die in einer Speichereinheit des Steuerrechners 14 gespeichert sind. Die Reihenfolge der Entstehung der Datensätze 100 bis 104 ist durch Kleinbuchstaben a, b und c angegeben. Zuerst wurde somit der Verbindungs-Datensatz 102, dann der Verbindungs-Datensatz 104 und zuletzt der Verbindungs-Datensatz 100 erzeugt.

Aufgrund der unterschiedlichen und zufälligen Verbindungsdauer ist die Reihenfolge der Entstehung der Verbindungen unabhängig von einer statischen Nummer N1 bis NX zur Numerierung der Speicherplätze eines zusammenhängenden Speicherbereiches für die Speicherung der Datensätze 100 bis 104. X ist eine natürliche Zahl größer Eins. Sind alle Speicherplätze belegt, kann ein neuer Verbindungs-Datensatz erst dann gespeichert werden, wenn ein Speicherplatz frei wird. Sobald ein neuer Datensatz im Steuerrechner 14 erzeugt wird, wird zur Anschlußbaugruppe 12 unverzüglich eine Änderungsmeldung gesendet, welche die Daten des neu erzeugten Datensatzes enthält. In der Anschlußbaugruppe 12 werden die übertragenen Daten als Datensätze 110 bis 114 gespeichert. Die Datensätze 110 bis 114 sind somit Kopien der Datensätze 100 bis 104. Die zeitliche Reihenfolge der Entstehung der Datensätze 110 bis 114 stimmte mit der Reihenfolge der Entstehung der Datensätze 100 bis 104 überein, vgl. Kleinbuchstaben a, b und c. Für die Datensätze 110 bis 114 ist ebenfalls eine statische Numerierung N1 bis NX festgelegt, die mit der Numerierung der Speicherplätze für die Datensätze 100 bis 104 übereinstimmt.

Wird eine sogenannte virtuelle Verbindung zwischen zwei Teilnehmern abgebaut, so wird im Steuerrechner 14 der durch den zugehörigen Datensatz, z. B. 104, belegte Speicherplatz freigegeben. Der auf dem freigegebenen Speicherplatz gespeicherte Datensatz ist ungültig bzw. gelöscht. Gleichzeitig wird an die Anschlußbaugruppe 12 eine Änderungsmeldung übertragen, gemäß der durch den zur Verbindung gehörenden Datensatz, z. B. 114, belegte Speicherplatz in der Anschlußbaugruppe 12 ebenfalls freizugeben ist.

Nach dem Einstecken der Anschlußbaugruppe 22 in die Vermittlungsstelle 10 werden Kopien der zum Zeitpunkt des Einstekkens in der Anschlußbaugruppe 12 gespeicherten Datensätze 110 bis 114 nacheinander über den Querkanal 66 zur Anschlußbaugruppe 22 kopiert, vgl. Pfeile 116 und 118. Das Kopieren wird am Speicherplatz mit der Nummer N1 begonnen. Danach werden die Datensätze 112 bis 114 entsprechend ihren Speicherplatz-Nummern N2 und NX kopiert. Der Kopiervorgang ist durch Datensätze 120 bis 124 dargestellt, die Kopien der Datensätze 110 bis 114 sind. In einem Speicher der Anschlußbaugruppe 22 werden die Kopien 120 bis 124 als Datensätze 130 bis 134 an Speicherplätzen N1 bis NX gespeichert. Das Speichern eines Datensatzes 130 bis 134 wird über den Querkanal 66 jeweils mit Hilfe einer Quittungsmeldung quittiert, die von der Anschlußbaugruppe 22 zur Anschlußbaugruppe 12 gesendet wird, vgl. Pfeil 136.

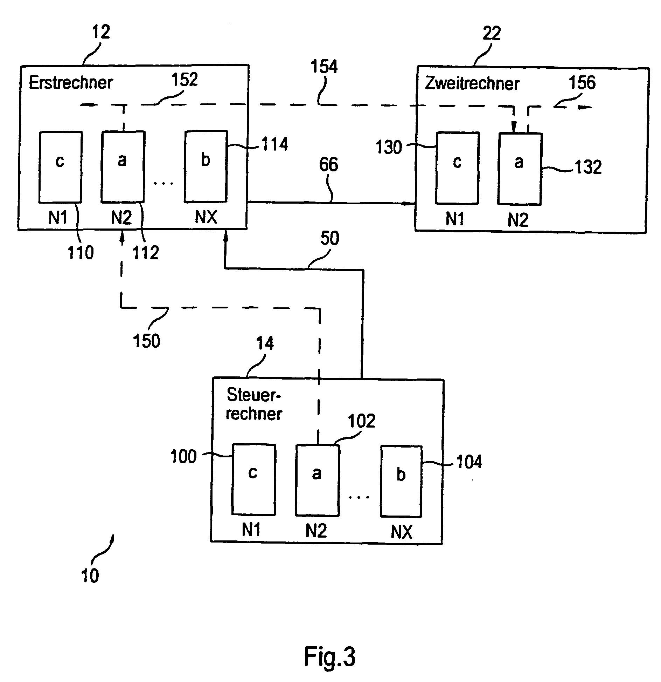

Figur 3 zeigt die Übertragung von Anderungsmeldungen während des Kopierens der Datensätze 110 bis 114 zur AnschluLibaugruppe 22. Es sei angenommen, daß die Datensätze 110, 112 bereits kopiert worden sind, so daß in der Anschlußbaugruppe 22 die Datensätze 130 und 132 gespeichert sind, die den Datensätzen 110 und 112 entsprechen. Die restlichen Datensätze bis zum Datensatz 114 wurden noch nicht kopiert. Nach dem Kopieren des Datensatzes 112 und vor dem Kopieren der weiteren Datensätze bis zum Datensatz 114 wird im Steuerrechner aufgrund eines Verbindungsabbaus der Datensatz 102 gelöscht, der die gleichen Daten wie der Datensatz 112 enthält. Über den Übertragungskanal 50 wird unverzüglich eine Änderungsmeldung an die Anschlußbaugruppe 12 gesendet, gemäß der der Datensatz 112 zu löschen ist, vgl. Pfeil 150. In der Anschlußbaugruppe 12 wird die Änderungsmeldung 150 unverzüglich bearbeitet, wobei der Datensatz 112 gelöscht wird. Das Löschen hat zur Folge, daß die Schaltung 40, vgl. Figur 1, entsprechend der Änderung angesteuert wird, vgl. Pfeil 152. Außerdem wird in der Anschlußbaugruppe 12 überprüft, ob der Datensatz 112 bereits kopiert worden ist. Da dies ist der Fall ist, wird die den Datensatz 112 betreffende Änderungsmeldung über den Querkanal 66 als eine Änderungsmeldung 154 an die Anschlußbaugruppe 22 gesendet.

In der Anschlußbaugruppe 22 wird nach dem Empfang der Änderungsmeldung 154 der dem Datensatz 112 entsprechende Datensatz 132 gelöscht. Nach dem Löschen des Datensatzes 132 wird die Schaltung 60, vgl. Figur 1, entsprechend der Änderung angesteuert, vgl. Pfeil 156. Der Empfang der Anderungsmeldung 154 wird von der Anschlußbaugruppe 22 der Anschlußbaugruppe 12 über den Duplex-Übertragungskanal 66 bestätigt. Anschließend wird mit dem Kopieren der weiteren Datensätze bis zum Datensatz 114 fortgefahren.

Betrifft eine über den Übertragungskanal 50 empfangene Änderungsmeldung einen Datensatz, z. B. den Datensatz 114, der noch nicht kopiert worden ist, so wird der Datensatz in der Anschlußbaugruppe 12 entsprechend der Anderungsmeldung geändert. An die Anschlußbaugruppe 22 wird keine Anderungsmeldung weitergeleitet.

Durch das anhand der Figuren 2 und 3 erläuterte Verfahren können Kopien der Datensätze 100 bis 114 von der Anschlußbaugruppe 12 zur Anschlußbaugruppe 22 übertragen werden, wobei Änderungen an den zu kopierenden Datensätzen 110 bis 114 schon während des Kopiervorgangs bearbeitet werden. Am Schluß des Kopiervorgangs, das heißt, wenn alle Datensätze 110 bis 114 von der Anschlußbaugruppe 12 zur Anschlußbaugruppe 22 kopiert worden sind, befindet sich die Anschlußbaugruppe 22 in Betriebsbereitschaft für die Übernahme der Funktion der Anschlußbaugruppe 12 bei einer Störung in dieser Baugruppe. Beim Umschalten zwischen den Anschlußgruppen 12 und 22 treten ab diesem Zeitpunkt keine wesentlichen Datenverluste auf. Das angegebene Verfahren ist eine sichere Methode, um insbesondere bei unterschiedlich lange bestehenden Verbindungen und erst recht bei sogenannten permanenten Verbindungen Datenverluste durch Betriebsstörungen in der Anschlußbaugruppe 12 zu vermeiden.

Das anhand der Figuren 2 und 3 erläuterte Verfahren gestattet es, nach dem Abschluß des Kopiervorgangs auf das anhand der Figur 1 erläuterte Verfahren umzuschalten. Es ergibt sich ein "gleitender" Übergang. Zusätzliche Verfahrensschritte sind nicht auszuführen.

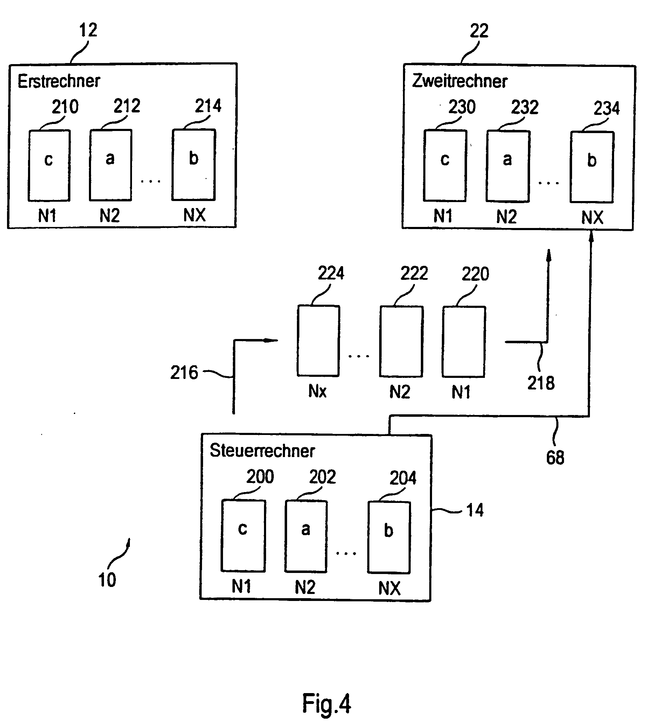

Figur 4 zeigt das konsistente Kopieren von Datensätzen 200 bis 204 in der Vermittlungsstelle 10 gemäß einem zweiten Ausführungsbeispiel. Vor Beginn des Verfahrens werden die Datensätze 200 bis 204 im Speicher des Steuerrechners 14 nach und nach beim Verbindungsaufbau und Verbindungsabbau gespeichert. Ebenfalls vor Beginn des Verfahrens werden die Kopien 210 bis 214 der Datensätze 200 bis 204 mit Hilfe von Änderungsmeldungen vom Steuerrechner 14 zur Anschlußbaugruppe 12 übertragen und in deren Speicher gespeichert. Die Reihenfolge der Entstehung der Datensätze 200 bis 204 wird wieder durch Kleinbuchstaben a, b und c angegeben. Der Datensatz 202 wurde zuerst erzeugt. Danach wurde der Datensatz 204 erzeugt. Der Datensatz 200 wurde zuletzt erzeugt.

Beim Ausführungsbeispiel gemäß Figur 4 werden die Datensätze 200 bis 204 direkt vom Steuerrechner 14 über den übertragungskanal 68 zur Anschlußbaugruppe 22 übertragen, vgl. Pfeile 216 und 218. Im Übertragungskanal 68 übertragene Datensätze 220 bis 224 sind in dieser Reihenfolge Kopien der Datensätze 200 bis 204. Die Datensätze 200 bis 204 werden in der Reihenfolge ihrer Speicherung im Speicher übertragen, d. h. gemäß der Nummern N1 bis NX. Somit wird zuerst der Datensatz 200, dann der Datensatz 202 und erst zuletzt der Datensatz 204 kopiert.

In der Anschlußbaugruppe 22 werden die über den Übertragungskanal 68 übertragenen Datensätze 220 bis 224 als Datensätze 230 bis 234 gespeichert. Der Querkanal 66, vgl. Figuren 1 bis 3, ist beim Ausführungsbeispiel gemäß Figur 4 nicht vorhanden. Die Anschlußbaugruppe 22 erhält die Datensätze und die Anderungsmeldungen ausschließlich direkt vom Steuerrechner 14, d. h. ohne Zwischenschaltung der Anschlußbaugruppe 12.

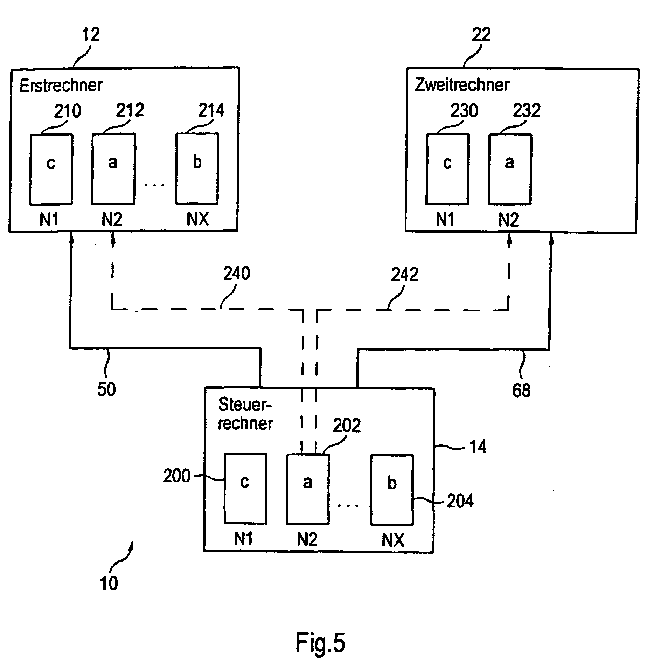

Figur 5 zeigt die Übertragung von Änderungsmeldungen während des Kopierens der Datensätze 200 bis 204. Es wird wiederum angenommen, daß die Datensätze 200 und 202 bereits kopiert worden sind und somit die Datensätze 230 und 232 bereits in der Anschlußbaugruppe 22 gespeichert worden sind. Noch vor dem Kopieren des Datensatzes 204 wird die durch den Datensatz 202 bezeichnete Verbindung beendet. Dies führt dazu, dass der Datensatz 202 im Speicher des Steuerrechners 14 gelöscht wird. Der Steuerrechner 14 erzeugt unverzüglich nach dem Löschen eine erste Änderungsmeldung 240, die über den Ubertragungskanal 50 an die Anschlußbaugruppe 12 gesendet wird. In der Änderungsmeldung 240 ist ein Befehl zum Löschen des Datensatzes 212 im Speicher der Anschlußbaugruppe 12 enthalten. Die Änderungsmeldung 240 wird in der Anschlußbaugruppe 12 unverzüglich nach dem Empfang bearbeitet, wobei der Datensatz 212 gelöscht wird. Das Löschen des Datensatzes 212 beeinflußt die Ansteuerung der Schaltung 40, vgl. Figur 1.

Gleichzeitig mit der Anderungsmeldung 240 sendet der Steuerrechner 14 eine Änderungsmeldung 242 über den Übertragungskanal 68 zur Anschlußbaugruppe 22. Die Änderungsmeldung 242 wird in der Anschlußbaugruppe 22 noch vor dem Kopieren des nächsten Datensatzes 204 bearbeitet. Beim Bearbeiten wird der Datensatz 232 aus dem Speicher der Anschlußbaugruppe 22 gelöscht und die Schaltung 60, vgl. Figur 1, der Anschlußbaugruppe 22 wird gemäß der Änderung angesteuert.

Auch das Verfahren gemäß den Figuren 5 und 6 gestattet es, nach dem Abschluß des Kopiervorgang sofort das anhand der Figur 1 erläuterte Verfahren durchzuführen. Zusätzliche Verfahrensschritte sind nicht auszuführen.

Bei einem anderen Ausführungsbeispiel für das Kopierverfahren wird der Querkanal 66, vgl. Figuren 1 bis 3, zum Übertragen der Datensätze und der Übertragungskanal 68 zum Übertragen der Änderungsmeldungen verwendet. Bei einem weiteren Ausführungsbeispiel werden die Datensätze über den Übertragungskanal 68 und die Änderungsmeldung, wie oben anhand der Figur 3 erläutert, über den Übertragungskanal 50 und den Querkanal 66 übertragen.

## Patentansprüche

1. Verfahren zum Betreiben eines Zweitrechners (22), bei dem in einer Speichereinheit eines Erstrechners (12) Daten gespeichert werden,
in einer Speichereinheit eines Zweitrechners (22) ein Doppel (62) der Daten gespeichert wird,
von einem Steuerrechner (14) abhängig von Ereignissen beim Betrieb des Steuerrechners (14) die Daten betreffende Änderungsmeldungen erzeugt werden, **dadurch gekennzeichnet, dass** der Steuerrechner (14) die zu einem Ereignis gehörende Änderungsmeldung unverzüglich nach dem Ereignis an den Erstrechner (12) überträgt,
ein Doppel der Änderungsmeldung auch an den Zweitrechner (22) übertragen wird,
die Daten (42) und das Doppel (62) der Daten gemäß der Anderungsmeldungen geändert werden,
und bei dem die Doppel der Änderungsmeldungen an den Zweitrechner (22) unverzüglich nach dem betreffenden Ereignis übertragen werden.

2. Verfahren nach Anspruch 1,
**dadurch gekennzeichnet,**
**daß** die Doppel der Änderungsmeldungen vom Steuerrechner (14) zum Zweitrechner (Figur 1, 22) ohne Zwischenschaltung des Erstrechners (12) übertragen werden (68).

3. Verfahren nach Anspruch 1,
**dadurch gekennzeichnet,**
**daß** die Doppel der Änderungsmeldungen (66) vom Erstrechner (12) zum Zweitrechner (Figur 1, 22) übertragen werden.

4. Programm zum Betreiben eines Zweitrechners (22),
mit einer durch mindestens einen Prozessor einer Datenverarbeitungsanlage (10) ausführbaren Befehlsfolge,
**dadurch gekennzeichnet,**
**daß** die Datenverarbeitungsanlage (10) beim Ausführen der Befehlsfolge veranlaßt wird, die Verfahrensschritte gemäß einem der Ansprüche 1 bis 3 durchzuführen.

## Claims

1. Method for operating a second computer (22), in which data is stored in a memory unit of a first computer (12), a duplicate (62) of the data is stored in a memory unit of a second computer (22), change messages relating to the data are created by a control computer (14) depending on events during operation of the control computer (14), **characterized in that** the control computer (14) transmits the change messages belonging to the event to the first computer (12) immediately after the event, a duplicate of the change message is also transmitted to the second computer (22), the data (42) and the duplicate (62) of the data are changed in accordance with the change message,
and in which the duplicates of the change messages are transmitted to the second computer (22) immediately after the event concerned.

2. Method in accordance with claim 1,
**characterized in that**
the duplicates of the change messages are transmitted (68) from the control computer (14) to the second computer (Figure 1, 22) without the involvement of the first computer (12).

3. Method in accordance with claim 1,
**characterized in that**
the duplicates of the change messages (66) are transmitted from the first computer (12) to the second computer (Figure 1, 22) .

4. Program for operating a second computer (22),
with a command sequence which can be executed by at least one processor of a data processing system (10), **characterized in that** the data processing system (10) is caused during the execution of the command sequence to perform the steps according to one of the claims 1 to 3.

## Revendications

1. Procédé d'exploitation d'un ordinateur secondaire (22), dans lequel
on mémorise des données dans une unité de mémoire d'un ordinateur primaire (12),
on mémorise un double (62) des données dans une unité de mémoire d'un ordinateur secondaire (22),
un ordinateur de commande (14) produit, en fonction d'événements se produisant lors du fonctionnement de l'ordinateur de commande (14), des messages de modification concernant les données,
**caractérisé par le fait que**
on transmet le message appartenant à un événement, immédiatement après l'événement, de l'ordinateur de commande (14) à l'ordinateur primaire (12),
on transmet aussi un double du message de modification à l'ordinateur secondaire (22),
on modifie les données (42) et le double (62) des données selon les messages de modification, et
on transmet le double des messages de modification à l'ordinateur secondaire (22) immédiatement après l'événement concerné.

2. Procédé selon la revendication 1,
**caractérisé par le fait qu'**on transmet (68) le double des messages de modification de l'ordinateur de commande (14) à l'ordinateur secondaire (figure 1, 22) sans passer par l'ordinateur primaire (12).

3. Procédé selon la revendication 1,
**caractérisé par le fait qu'**on transmet le double des messages de modification (66) de l'ordinateur primaire (12) à l'ordinateur secondaire (figure 1, 22).

4. Programme d'exploitation d'un ordinateur secondaire (22), avec une séquence d'instructions exécutable par au moins un processeur d'une installation de traitement de données (10),
**caractérisé par le fait qu'**il est fait en sorte que, lors de l'exécution de la séquence d'instructions, l'installation de traitement de données (10) mette en oeuvre les étapes du procédé selon l'une des revendications 1 à 3.
